# EUROPEAN PATENT SPECIFICATION

(11) **EP 4 644 099 B1**
(45) Date of publication and mention of the grant of the patent: **04.11.2026**
(21) Application number: 25161639.7
(22) Date of filing: 04.03.2025
(51) Int. Cl.: B29C 65/54, B29C 65/48, B29C 65/52, B29C 65/56, B29C 65/72, B29C 65/64, B29C 65/78, B23Q 1/01, B29L 24/00, B29L 31/00

(54) **BOX FRAME STRUCTURE COMPOSED OF COMPOSITE MATERIAL PLATES AND A METAL FRAME, AND PRODUCTION METHOD THEREOF**
KASTENRAHMENSTRUKTUR AUS VERBUNDSTOFFPLATTEN UND EINEM METALLRAHMEN SOWIE HERSTELLUNGSVERFAHREN DAFÜR
STRUCTURE DE CADRE DE BOÎTE COMPOSÉE DE PLAQUES EN MATÉRIAU COMPOSITE ET D'UN CADRE MÉTALLIQUE, ET SON PROCÉDÉ DE PRODUCTION

(30) Priority: 07.06.2024 CN 202410739838
(43) Date of publication of application: 05.11.2025
(73) Proprietor: Shanghai Top Numerical Control Technology Co., Ltd., Shanghai 201100 (CN)
(72) Inventor: WANG, Yuhan, Shanghai, 201100 (CN); HU, Yehui, Shanghai, 201100 (CN)
(74) Representative: Cabinet Chaillot

(56) References cited:
- EP-B1- 2 459 438
- CN-B- 115 434 994
- DE-A1- 10 260 430

## Description

### BACKGROUND OF THE INVENTION

### 1. Field of the Invention

The present invention relates to the technical field of machine tool structural parts, particular to a box frame structure composed of composite material plate and metal frame, and production method thereof.

### 2. Description of the Related Art

With the continuous progress of science and technology, the requirements for the precision stability and processing efficiency of machine tools and equipment are getting higher and higher. Traditional machine tool structural parts are usually manufactured by welding or casting of metal parts such as steel and aluminum. However, the excessively high coefficient of thermal expansion of metal materials and weight of metal materials restrict the improvement of accuracy, stability and processing efficiency of machine tools. The use of composite materials instead of metal materials to make machine tool structural parts has become a feasible technical approach. Compared with the traditional metal machine tool structure, the composite material structure meets the same strength and stiffness requirements, the weight is significantly reduced, according to the different compositions, the use of composite materials instead of metal can reduce the weight by 10%-60%, and the excellent chemical stability and extremely small thermal expansion coefficient of composite materials can also make the structural parts obtain higher precision stability.

However, composite materials are usually anisotropic, and only have good mechanical properties in certain directions, and the use of composite materials alone to make structural parts is expensive, the manufacturing process is complex, and it is impossible to guarantee that the structural parts have good mechanical properties in all directions. Therefore, composite materials are usually combined with metal materials to manufacture structural parts, and metal materials are used to compensate for the weak mechanical properties of composite materials in some directions. However, the thermal expansion coefficient of composite materials and that of metal materials are very different, and when the ambient temperature changes, the deformation inconsistency between composite materials and metal materials will lead to greater stress at the connection structure, which will make the connection structure twist and deform, thus changing the accuracy of the whole structural parts. In the prior art, patent EP2459438B1 discloses a quick method for building boats. Patent DE10260430A1 discloses a method for connecting a panel, in particular a sandwich panel, to an linear component by means of adhesive bonding. Patent CN115434994B discloses a composite material bonding structure.

### SUMMARY OF THE INVENTION

According to the existing problems in the prior art, there is provided a box frame structure composed of composite material plate and metal frame; on the other hand, there is also provided a production method for manufacturing the box frame structure.

The technical solution, according to claim 1, is as follows:

A box frame structure composed of composite material plate and metal frame, wherein
a surface structure of the box frame structure is made up of composite material structure plates, a prismatic structure of the box frame structure is made up of metal frames, and a reinforcing rib structure is arranged in the box frame structure, and the reinforcing rib structure is made up of the composite material structural plates;
the metal frame is used to connect two adjacent composite material structural panels, and a side of the metal frame protrudes with mounting grooves, and the mounting grooves clamp the two sides of the composite material structural plate respectively;
a glue storage groove and a glue injection hole are arranged on a bonding area of the metal frame and the composite material structural plate, and a structural glue is injected into the glue storage groove through the glue injection hole such that a uniform glue layer is formed.

In addition, the reinforcing rib structure comprises longitudinal reinforcing ribs and diagonal reinforcing ribs;
the longitudinal reinforcing ribs are distributed in the box frame structure along a direction of a long axis according to a first preset interval, and are perpendicularly connected and fixed with surface structure plates at the corresponding positions respectively;
the diagonal reinforcing rib are arranged between a pair of longitudinal reinforcing ribs which are adjacent, and the diagonal reinforcing ribs are fixedly connected to an edge of the longitudinal reinforcing ribs diagonally respectively and are perpendicularly connected and fixed with the surface structural plates at the corresponding positions;
the diagonal directions of the pair of diagonal reinforcing ribs which are adjacent are different

On the other hand, the composite material structure plate comprises a first panel, an intermediate layer, and a second panel, the first panel and the second panel are made of fibrous material, the intermediate layer is made of honeycomb material;
a metal embedded part is arranged on a preset position of the intermediate layer;
the first panel, the second panel, and the intermediate layer are connected into one body by the structural glue.

On the other hand, the fibrous material is carbon fiber-resin composite material;
the carbon fiber-resin composite material comprises a plurality of layers of carbon fiber clothes and a resin material bonded between the plurality of layers of carbon fiber clothes;
a reverse thermal expansion rate of the plurality of layers of carbon fiber clothes is the same as a thermal expansion rate of the resin material.

On the other hand, the honeycomb material is metal, and a honeycomb hole of the honeycomb material is arranged such that it is perpendicular to the first panel and the second panel;
the first panel and the second panel are reverse thermal expansion, a thermal expansion rate of the composite material structural plate in the thickness direction is zero.

On the other hand, the preset position is the position where composite material structural plate bears an external load;
the first panel and the second panel are provided with mounting holes in areas corresponding to the preset position, and a positioning device of the external structure passes through the first panel and the second panel through the mounting holes and is fixedly connected with the metal embedded part;
the external structure comprises the metal frame and an equipment guide rail.

On the other hand, the cross-section of the metal frame is L-shaped, and the mounting groove comprises a first mounting groove and a second mounting groove;
the first mounting groove is arranged so as to be perpendicular to the second mounting groove.

On the other hand, the metal frame comprises:
a main frame, the main frame is in the shape of a long cube, and a first side and a second side of the main frame are provided with a first mounting groove and a second mounting groove respectively;
the side of the main frame is also connected with an external device.

On the other hand, the metal frame is arranged on the external corner formed by the adjacent two composite material structural plates;
or the metal frame is arranged on the internal corner formed by the adjacent two composite material structural plates;
or when the composite material structural plates are lapped in a T-shape, the metal frames are arranged in the angles on the two sides of the composite material structural plate respectively.

A production method for box frame structure for manufacturing a box frame structure as mentioned above, comprises:
coating the structural glue at the fitting position of the composite material structural plate and the metal frame evenly, and inserting them into a preset installation position in the metal frame to combine to obtain a preset box frame;
injecting the structural glue into the glue injection holes on the metal frame respectively until the structural glue overflows the glue injection holes, so that the structural glue forms a uniform glue layer in the glue storage groove.

The invention has the beneficial effects as follows:
1. The box structure is adopted, and the surface structure of the box is made up of composite material structural plates, which maximize the characteristics of excellent rigidity and strength of the surface direction of the composite material structure plates, and the thermal deformation of the composite materials is very small, so as to ensure the thermal stability of the surface structure. The prismatic structure of the box adopts a metal frame, which will mainly expand and deform along the length of the box, and the deformation in the other two directions is very small, which will not cause unpredictable torsional deformation of the whole box structure and improve the accuracy and stability of the overall structure.
2. The connection between the composite material structural plate and the metal frame adopts the form of double-sided glue, and strengthens the rigidity and strength of the joint. Further, the thermal expansion of the metal frame is symmetrical for the composite material structural plate, and the thermal expansion of the metal frame will not affect the geometric position of the composite material structural plate, so that the thermal deformation of the composite material structural plate will not occur, so as to ensure the accuracy and stability of the overall box frame structure.
3. Composite material structural panels are easy to fabricate and can be manufactured in batches using artificial resin transfer molding (RTM) technology or by molding methods, while metal frame structures can also be easily obtained by extrusion, welding, etc., which are easier to manufacture than frame structures made of single composite materials.

### BRIEF DESCRIPTION OF THE DRAWINGS

Refer to the accompanying drawings to more fully describe embodiments of the present invention. However, the accompanying drawings are used only for illustration and do not constitute a limitation of the scope of the present invention.

Fig. 1 is an overall schematic diagram of the embodiment of the present invention;
Fig. 2 is a partial schematic diagram of the embodiment of the present invention;
Fig. 3 is a schematic diagram of the composite material structural plate of the embodiment of the present invention;
Fig. 4 is a schematic diagram of the reinforcing rib structure of the embodiment of the present invention;
Fig. 5 is a schematic diagram of the connecting part of the embodiment of the present invention;
Fig. 6 is a schematic diagram of the main frame of the embodiment of the present invention;
Fig. 7 is a schematic diagram of the production method of the embodiment of the present invention.

### DETAILED DESCRIPTION

The technical solutions in the embodiments of the present invention will be clearly and completely described below in conjunction with the accompanying drawings in the embodiments of the present invention, and it is clear that the described embodiments are only some embodiments of the present invention, not all embodiments. Based on the embodiments in the present invention, all other embodiments obtained by a person skilled in the art without creative labor fall within the scope of protection of the present invention.

In the description of the present invention, it is to be understood that the terms "center", "longitudinal", "transverse", "length", "width", "thickness", "up", "down", "front", "back", "left", "right", "vertical", "horizontal", "top", "bottom", "inner", "outer", "clockwise", "counterclockwise", "axial", "radial", "circumferential", etc., indicate an orientation or positional relationship based on the orientation or positional relationship shown in the drawings, it is only for the convenience of describing the invention and for simplifying the description, and does not indicate or imply that the device or element referred to must have a particular orientation, be constructed and operated in a particular orientation, and therefore cannot be construed as a limitation of the present invention.

In the invention, unless otherwise expressly specified or qualified, the terms "set-up", "mounted", "connected", "coupled", "fixed", etc., shall be construed broadly, e.g., they may be fixed or detachable; may be mechanically connected; may be directly connected or indirectly through an intermediate medium. For those skilled in the art, the specific meaning of the above terms in the present invention may be understood according to the specific circumstances.

It should be noted that, without conflict, the embodiments in the present invention and the features in the embodiments may be combined with each other.

The present invention is further described below in conjunction with the accompanying drawings and specific embodiments, but is not used as a limitation of the present invention.

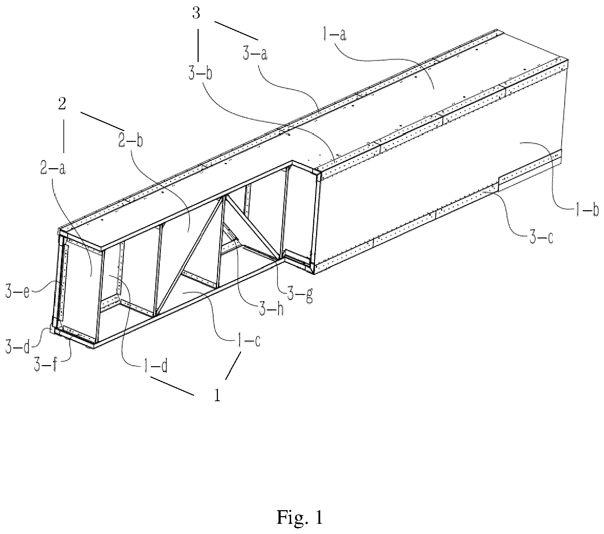

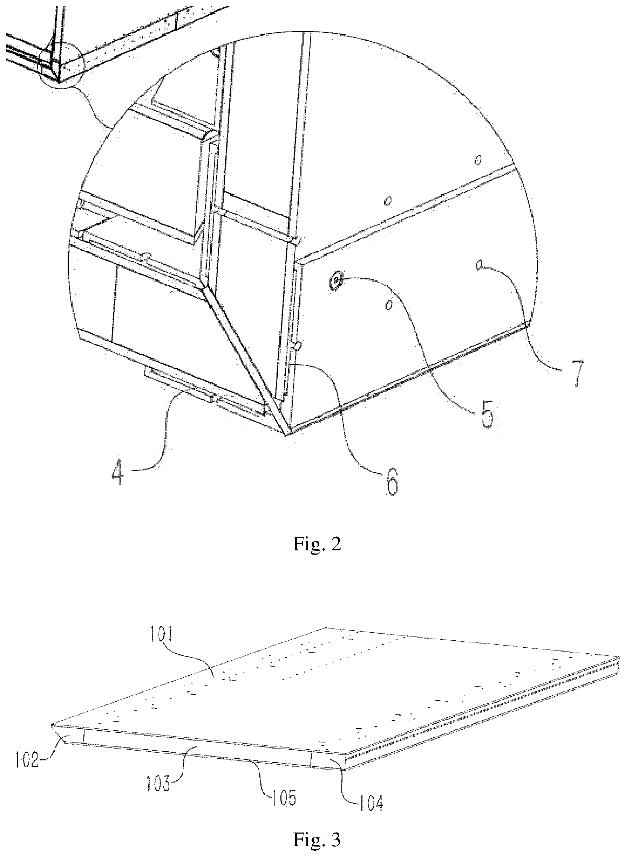

The invention is as follows:
A box frame structure, as shown in Fig. 1 and Fig. 2, a surface structure of the box frame structure is made up of composite material structure plates 1, a prismatic structure of the box frame structure is made up of metal frames 3, and a reinforcing rib structure 2 is arranged in the box frame structure, and the reinforcing rib structure is made up of the composite material structural plates 1 or composite material reinforcing plate;
the metal frame 3 is used to connect two adjacent composite material structural panels 1, and a side of the metal frame 3 protrudes with mounting grooves, and the mounting grooves clamp the two sides of the composite material structural plate 1 respectively.

When the metal frame 3 is combined with the composite material structural plate 1, the structural glue 4 is injected into the glue storage groove 6 through the glue injection hole 5, and the structural glue 4 is, through the glue storage groove 6, uniformly distributed in the contact area between the metal frame 3 and the composite material structural plate 1 and cured.

Specifically, in view of the problem that the similar structural parts are affected by temperature due to the inconsistency of the thermal expansion coefficients of the composite materials and metal parts in the prior art so that the connection structure is twisted and deformed so that the structural accuracy and stability are poor, the composite material structural plate in this solution is in double-sided contact with the metal frame when it is connected with the metal frame, and it is a symmetrical structure along the thickness direction of the composite material structural plate. Thus, when the material temperature changes, the expansion of the structural glue and the metal material is symmetrical along the thickness direction of the composite material structural plate, the position of the composite material structural plate relative to the metal frame will remain unchanged, so that the surface structure of the entire box frame is not affected by temperature changes, which greatly improves the accuracy and stability of the overall frame structure.

Specifically, as shown in Fig. 1, the composite material structural plate 1 in the solution comprises a composite material structural plate 1-a, a composite material structural plate 1-b, a composite material structural plate 1-c and a composite material structural plate 1-d, which are enclosed to form a long hollow square tubular structure, which is used as a column, a rod and other structures to be stressed when the frame structure is subsequently made.

At the chamfered corners of the adjacent composite material structural plate 1, such as the chamfered corners of the composite material structural plate 1-b and the composite material structural plate 1-c, a metal frame 3-c is arranged, and the metal frame 3-c is used for wrapping and connecting the chamfered corners formed by the composite material structural plate 1-b and the composite material structural plate 1-c.

Correspondingly, a metal frame 3-a is arranged between the composite material structural plate 1-a and the composite material structural plate 1-d, a metal frame 3-b is arranged between the composite material structural plate 1-b and the composite material structural plate 1-a, and a metal frame 3-d is arranged between the composite material structural plate 1-c and the composite material structural plate 1-d.

Considering that the traditional mechanical connection mode often needs to open a hole at the connection and reconnect, and the opening is easy to lead to stress concentration and then affect the strength, the metal frame 3 and the composite material structural plate 1 are bonded and fixed by glue in the present embodiment, so that the stress damage caused by the opening is avoided.

However, in the glue adhesion process, the traditional way of coating the surface of the workpiece with structural glue and closing the workpiece is easy to lead to problems such as the flow and unevenness of the structural glue, which in turn leads to the decline of the adhesive strength. In this embodiment, a plurality of glue injection holes 5 are distributed on the metal frame 3, and a glue storage groove 6 is designed on one side close to the composite material structural plate 1. When the structural glue 4 is injected into the glue storage groove 6 through the glue injection hole 5, the structural glue 4 is, through the glue storage groove 6, evenly distributed in the contact area between the metal frame 3 and the composite material structural plate 1, and then solidifies to form a uniform glue layer.

The glue storage groove 6 is used to represent a gap formed between the metal frame 3 and the composite material structural plate 1, and the structural glue 4 flows into the glue storage groove 6 through the glue injection hole 5 and is distributed in the glue storage groove 6 to form a glue layer. By controlling the depth of the glue storage groove 6 and the type of structural glue 4, the combination of glue injection pressure can form a relatively uniform glue layer in the glue storage groove 6 to achieve a firm connection.

Further, the glue storage groove 6 can also be a shape with a specific distribution formed by processing the surface of the metal frame 3. For example, in one embodiment, the glue injection hole 5 is evenly distributed along a direction of a long axis of the metal frame 3 according to a specific interval, and the glue storage groove 6 with tree-like distribution is designed on the back side and is connected with the glue injection hole 5. When the structural glue 4 is injected into the glue storage groove 6, the structural glue 4 evenly diffuses into the interface along the tree-like branch under the action of pressure, and forms a uniformly distributed glue layer, so as to achieve a better bonding effect. In other embodiments, the glue storage groove 6 may also be the distribution forms such as matrix-shaped, snowflake-shaped, net-like and so on.

Structural glue 4 is a liquid or semi-liquid adhesive that is used for fixing the metal frame 3 and the composite material structural plate 1. It may be structural glue, epoxy resin glue or other equivalent adhesive in other embodiments, and it can be cured naturally at room temperature, or cured after baking.

The metal frame 3 is a metal structure, which has corners and can fix and stress the composite material structural plate 1, and its profile is C-shaped, L-shaped, or at other angles. It should be noted that it can be installed at the outer corner of the composite material structural plate 1-a and the composite material structural plate 1-d as illustrated, and can also be attached to the inner corner of the composite material structural plate 1-a and the composite material structural plate 1-d. Depending on the fitting position, the glue storage groove 6 will be adjusted to different surfaces to face the composite material structural plate 1.

In an embodiment, the box frame structure further comprises a plurality of reinforcing rib structures 2;
the plurality of reinforcing rib structures 2 comprise longitudinal reinforcing ribs 2-a and diagonal reinforcing ribs 2-b;
the longitudinal reinforcing ribs 2-a are distributed in the box frame structure along a direction of a long axis according to a first preset interval, and are perpendicularly connected and fixed with the composite material structural plates 1, which act as surface structure plates, respectively;
the diagonal reinforcing rib 2-b are arranged between a pair of longitudinal reinforcing ribs 2-a which are adjacent, and the diagonal reinforcing ribs 2-b are fixedly connected to an edge of the longitudinal reinforcing ribs 2-a diagonally respectively;
the diagonal directions of the pair of diagonal reinforcing ribs 2-b which are adjacent are different, the longitudinal reinforcing ribs 2-a and the diagonal reinforcing ribs 2-b are fixed with the composite material structural plate 1 through the metal frame 3.

The diagonal reinforcing ribs 2-b are fixedly connected to an edge of the longitudinal reinforcing ribs 2-a diagonally respectively and are perpendicularly connected and fixed with the composite material structural plates 1, which act as surface structural plates, at the corresponding positions.

Specifically, in order to achieve better structural strength, a plurality of reinforcing ribs structures 2 are also arranged in the box frame structure, the plurality of reinforcing ribs structures 2 comprise longitudinal reinforcing ribs 2-a and diagonal reinforcing ribs 2-b, so as to achieve reinforcement of the internal structure.

The longitudinal reinforcing ribs 2-a are distributed in the box frame structure along the direction of the long axis according to the first preset interval, and the edges are arranged such that they are perpendicular to the composite material structural plates 1 respectively. Then, the corner formed by the connection part of the edge of the longitudinal reinforcing ribs 2-a and the composite material structural plate 1, is provided with the corresponding metal frame 3, and the glue injection and curing treatment are carried out according to the above-mentioned process, so that a better mechanical conduction structure is realized, the force in the direction of the short axis can be better dispersed, and the bending performance of the overall structure is improved.

Specifically, in the frame structure shown in Fig. 1, the metal frame 3 that fixes the longitudinal reinforcing rib 2-a comprises a metal frame 3-e and a metal frame 3-f.

Then, in order to achieve better compressive performance of the tubular structure, in this embodiment, a diagonal reinforcing rib 2-b is arranged diagonally between a pair of longitudinal reinforcing rib 2-a which are adjacent, and the compressibility resistance of the frame structure is improved by force conduction of the longitudinal reinforcing rib 2-a. The upper and lower ends of the diagonal reinforcing rib 2-b are connected with the longitudinal reinforcing ribs 2-a, and the two ends of the side are connected with the composite material structural plate 1 respectively. Similarly, the parts of the edge are wrapped by a metal frame 3, including a metal frame 3-h and a metal frame 3-g, and fixed by injecting glue.

In an embodiment, the reinforcing rib structure 2 is a carbon fiber panel.

In an embodiment, the composite material structural plate 1 and the reinforcing rib structure 2 are the same composite material structural plate 1.

The three-layer structural plate comprises a first panel and a second panel on the upper and lower sides, and at least one intermediate layer is arranged between the first panel and the second panel.

The first panel, the second panel and the intermediate layer can be bonded and fixed.

Specifically, in order to achieve a better substitution of traditional metal materials, in this embodiment, improvements are made for composite material structural plate 1. As shown in Fig. 3, this composite material structural plate 1 is successively provided with a first panel, a second panel and an intermediate layer from top to bottom. In one embodiment, the first panel and the second panel are fibrous materials, and the intermediate layer is an aluminum honeycomb panel. Thus, the composite material structural plate 1 is composed of a carbon fiber panel 101, an aluminum honeycomb panel 103 as a sandwich layer, and a carbon fiber panel 104.

The layers are bonded together by means of bonding, the ways of bonding includes ambient curing by applying a structural glue or curing by baking.

Further, in order to achieve a better strengthening effect, a pair of embedded part 102 and embedded part 104 are also laid in the part of the composite material structural plate 1 close to the corner in the subsequent combination process, so as to improve the local mechanical properties of the plate.

In other embodiments, the position of the embedded parts will also be changed. For example, when the guide rail is arranged on the composite material structural plate 1 on one of the sides of the box frame structure, only one or more embedded parts can be arranged in the area corresponding to the guide rail on the composite material structural plate 1, and the direction of the embedded part is parallel or crosses with the guide rail.

When the composite material structural plate 1 is fixedly connected with an external guide rail, the preset position is located on the guide rail connection position.

The rail mounts of the external guide rails penetrate the embedded parts and are secured.

In this embodiment, because the composite material structural plate 1 itself is a composite material, if the connection position between the composite material structural plate 1 and the guide rail is fixed by bolts and other means, it is easy to generate a large shear force there so as to destroy the structure of the fibrous material. For this purpose, embedded parts can be inserted in the intermediate layer and mounting holes can be arranged in advance at preset position where the external guide rails are to be installed. Then, when installing the external guide rail, the rail mounts of the external guide rail penetrate the embedded part and are fixed, avoiding damage to the fibrous material on the panel.

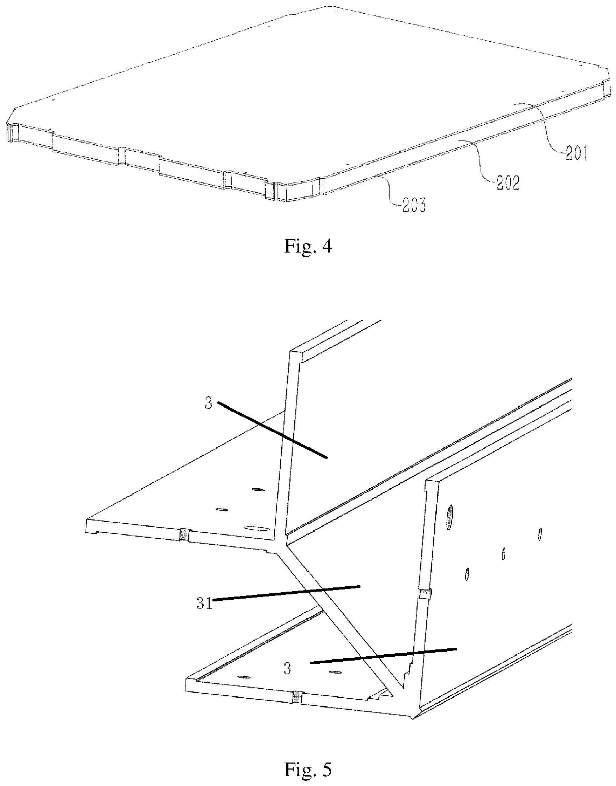

Similarly, as shown in Fig. 4, in order to achieve better structural reinforcement, a carbon fiber panel 201, an aluminum honeycomb panel 202 as a sandwich layer, and a carbon fiber panel 203 that are successively bonded can also be arranged in the reinforcing rib structure 2.

In an embodiment, the fibrous material is carbon fiber-resin composite material;
the carbon fiber-resin composite material comprises a plurality of layers of carbon fiber clothes and a resin material bonded between the plurality of layers of carbon fiber clothes;
a reverse thermal expansion rate of the plurality of layers of carbon fiber clothes is the same as a thermal expansion rate of the resin material.

Specifically, in order to control the thermal expansion of the composite material structural plate 1, the fibrous material is adjusted in this embodiment to be set to a carbon fiber cloth with a specific number of layers and a resin material impregnated with the carbon fiber cloth. Because the carbon fiber cloth itself has the characteristics of reverse thermal expansion, by selecting the number of the layers and direction of the carbon fiber cloth, and adjusting the proportion of the resin material in the overall fiber panel, the reverse thermal expansion rate of the plurality of layers of carbon fiber clothes are the same as the thermal expansion rate of the resin material, and then the thermal expansion rate of the overall fibrous material is 0, and the thermal stability of the structure is improved.

In an embodiment, the honeycomb material is metal, and a honeycomb hole of the honeycomb material is arranged such that it is perpendicular to the first panel and the second panel;
the first panel and the second panel are reverse thermal expansion, a thermal expansion rate of the composite material structural plate in the thickness direction is zero.

Specifically, in order to achieve better thermal stability of the composite material as a whole, in this embodiment, the structure of the honeycomb material is further arranged so that the honeycomb holes are perpendicular to the first panel and the second panel. At the same time, the proportion of the resin material is controlled so that the first panel and the second panel themselves have reverse thermal expansion, and the tensile force of the fiberboard counteracts the expansion of the honeycomb material in the height direction, so that the thermal stability of the frame is realized.

In an embodiment, the metal frame 3 comprises a first plane and a second plane arranged on the outer side and fitted with the composite material structural plate 1 respectively, and a row of first mounting holes 7 are arranged in the first plane and the second plane respectively;
the glue injection hole 5 is closer to the corner of the metal structural part than the first mounting hole 7;
a second mounting hole is arranged in the position corresponding to the first mounting hole on the composite material structural plate 1;
when the composite material structural plate 1 is combined with the metal frame 3, the first mounting hole and the second mounting hole are connected.

Specifically, in order to achieve a better installation effect, in this embodiment, a row of first mounting holes 7 are respectively arranged in the first plane and the second plane of the metal frame 3, and a second mounting hole is arranged in the position corresponding to the first mounting hole on the composite material structural plate 1.

When the composite material structural plate 1 needs to be combined with the metal frame 3, the first mounting hole 7 and the second mounting hole are anastomosed in advance, and the composite material structural plate 1 is connected with the metal frame 3, and then glue injection and fixing treatment are carried out.

Through the above-mentioned arrangement, the composite material structural plate 1 and the metal frame 3 can be accurately positioned, and the pre-pressure is applied to the composite material structural plate 1 and the metal frame 3 through the positioning device, so that the structural glue in the glue storage groove can be bonded to the composite material structural plate 1 and the metal frame 3.

Correspondingly, when the reinforcing rib structure 2 is combined with the metal frame 3, the first mounting hole and the second mounting hole are also connected through a positioning device, and then glue injection and fixing are carried out.

Specifically, at the time of installation, based on the above design, the metal structural part has the following installation methods:
the metal frame 3 is arranged on the external corner formed by the adjacent two composite material structural plates 1;
or the metal frame 3 is arranged on the internal corner formed by the adjacent two composite material structural plates 1;
or when the composite material structural plates 1 are lapped in a T-shape, the metal frames 3 are arranged in the angles on the two sides of the composite material structural plate 1 respectively.

Through the above settings, a better installation effect can be achieved.

In one embodiment, as shown in Fig. 5, when two adjacent composite material structural plates 1 form corners, the L-shaped metal frame 3 is clamped on the internal corner on the inside and the external corner on the outside of the composite material structural plate 1 respectively, and the two sides of each of the composite material structural plate 1 are clamped respectively through the first mounting groove and the second mounting groove.

A connecting part 31 is further arranged in the middle of the metal frame 3, and the connecting part 31 passes through the gap between the adjacent composite material structural plates 1 to connect the metal frame 3 on the inner and outer sides respectively.

Specifically, in order to achieve better structural strength, in this embodiment, a pair of metal frames 3 are respectively arranged on the inner and outer sides of the corners of the composite material structural plate 1 in view of the situation that the corners of the composite material structural plate 1 are formed, so as to realize the fixed connection of the opposite sides. In this embodiment, in order to further improve the structural strength thereof, a connecting part 31 can be arranged in the gap between the adjacent composite material structural plates 1 to connect the metal frames 3 on the inner and outer sides.

In an embodiment, this kind of metal frame 3 can form the first and second mounting grooves at one time by pouring, aluminum extrusion and other processes.

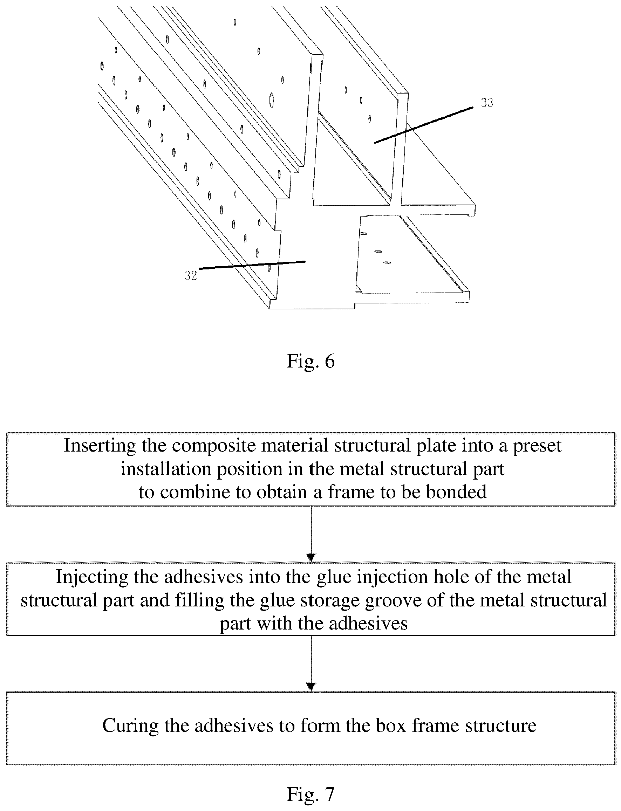

In an embodiment, as shown in Fig. 6, the metal frame 3 comprises:
a main frame 32, the main frame 32 is in the shape of a long cube;
at least one mounting groove 33, including a first mounting groove and a second mounting groove. The mounting grooves 33 are arranged on the side of the main frame 3 respectively, the mounting grooves are U-shaped, and the mounting grooves 33 are used for fixing the composite material structural plate.

Fig. 6 shows an embodiment of two mounting grooves 33, which can also be arranged on a plurality of sides as required.

In the mounting groove, the corresponding position is provided with a first mounting hole, a glue groove and a glue injection hole, which are used for accessing the positioning device, and the glue injection and the fixing.

Specifically, in order to achieve better connection strength, a long cube-shaped main frame 32 is also arranged in the metal frame 3, which is made of metal, and U-shaped mounting grooves 33 are respectively arranged on two sides. When installed, the composite material structural plate 1 is inserted into the mounting groove 33 and is injected by a glue through a glue injection hole and is fixed respectively, and penetrates into the embedded part through a positioning device for fixing.

On this basis, the main frame 32 can also be connected to an external guide rail.

A production method for box frame structure for manufacturing a box frame structure, as shown in Fig. 7, the production method comprises:
coating the structural glue at the fitting position of the composite material structural plate and the metal frame evenly, and inserting them into a preset installation position in the metal frame to combine to obtain a preset box frame;
injecting the structural glue into the glue injection holes on the metal frame respectively until the structural glue overflows the glue injection holes, so that the structural glue forms a uniform glue layer in the glue storage groove.

Specifically, in order to achieve better production efficiency, in this embodiment, the above-mentioned production method is also designed for producing the box frame structure.

Specifically, according to the parameters of the box frame structure to be designed in advance, mainly including the specification size of length * width, the composite material structural plate and the metal structural part of the corresponding length can be selected. When it is necessary to set up the reinforcing rib structure, it is also easy to design the corresponding reinforcing rib structure size.

Based on the dimensional data, the composite material structural plates, metal structural parts and reinforcing rib structures are cut, and then the composite material structural plates are inserted into the preset installation positions in the metal structural parts and combined into a frame to be bonded that meets the design requirements.

Subsequently, the glue injection hole of the metal structural part is injected with structural glue and the glue storage groove of the metal structural part is filled with the structural glue, which can maintain a specific pressure during the injection process, and can also be set in a vacuum environment to exclude the air in the glue storage groove as needed, so that the structural glue is evenly distributed in the glue storage groove and reduces the air bubbles in the glue layer at the same time.

Finally, the structural adhesive is cured to form a box frame structure, which can be cured at room temperature or baked, which will be adjusted according to the different structural glues.

**In** an embodiment, the production method also includes the use of a positioning device to fix the composite material structural plate after it has been inserted into a preset mounting position.

Correspondingly, in order to achieve better installation accuracy, in this embodiment, after the composite material structural plate is inserted into a preset installation position, the second mounting screw hole on the composite material structural plate is also anastomosed to the first mounting screw hole on the metal structural part, and the positioning device is used to fix, and then the fixing is carried out by the method of glue injection and curing, so that a better fixing effect is realized.

Specifically, in the existing equipment of the machine tool, machining center and so on, in order to realize the processing of the workpiece, processing devices such as spindle and milling cutter are usually arranged above the processing table. At the same time, in order to realize the processing of the workpiece of a larger area, the processing device can be hoisted in the form of gantry, so as to facilitate the moving of the processing device in the processing process.

In general, in order to achieve lighter mass and higher load, the gantry structure will use a combination of multiple rod-like components to form a corresponding frame structure, such as the derivation structure commonly found in cranes and factories, which is divided into longitudinal beams, cross beams and diagonal beams according to different functions. Among them, the rod assembly can be replaced with the box frame structure described above to replace the existing metal material crossbar, so as to achieve a lower overall weight.

The above is only a preferred embodiment of the present invention, and is not intended to limit the scope of protection of the present invention, which scope is limited only by the appended claims.

## Claims

1. A box frame structure composed of composite material plate and metal frame, wherein
a surface structure of the box frame structure is made up of composite material structure plates (1), a prismatic structure of the box frame structure is made up of metal frames (3), and a reinforcing rib structure (2) is arranged in the box frame structure, and the reinforcing rib structure (2) is made up of the composite material structural plates (1);
the metal frame (3) is used to connect two adjacent composite material structural panels (1), and a side of the metal frame (3) protrudes with mounting grooves (33), and the mounting grooves (33) clamp the two sides of the composite material structural plate (1) respectively;
a glue storage groove (6) and a glue injection hole (5) are arranged on a bonding area of the metal frame (3) and the composite material structural plate (1), and a structural glue (4) is injected into the glue storage groove (6) through the glue injection hole (5) such that a uniform glue layer is formed;
**characterized in that** the reinforcing rib structure (2) comprises longitudinal reinforcing ribs (2-a) and diagonal reinforcing ribs (2-b);
the longitudinal reinforcing ribs (2-a) are distributed in the box frame structure along a direction of a long axis according to a first preset interval, and are perpendicularly connected and fixed with surface structure plates at the corresponding positions respectively;
the diagonal reinforcing rib (2-b) are arranged between a pair of longitudinal reinforcing ribs (2-a) which are adjacent, and the diagonal reinforcing ribs (2-b) are fixedly connected to an edge of the longitudinal reinforcing ribs (2-a) diagonally respectively and are perpendicularly connected and fixed with the surface structural plates at the corresponding positions;
the diagonal directions of the pair of diagonal reinforcing ribs (2-b) which are adjacent are different.

2. The box frame structure of claim 1, wherein the composite material structure plate (1) comprises a first panel, an intermediate layer, and a second panel, the first panel and the second panel are made of fibrous material, the intermediate layer is made of honeycomb material;
a metal embedded part (102, 104) is arranged on a preset position of the intermediate layer;
the first panel, the second panel, and the intermediate layer are connected into one body by the structural glue.

3. The box frame structure of claim 2, wherein the fibrous material is carbon fiber-resin composite material;
the carbon fiber-resin composite material comprises a plurality of layers of carbon fiber clothes and a resin material bonded between the plurality of layers of carbon fiber clothes;
a reverse thermal expansion rate of the plurality of layers of carbon fiber clothes is the same as a thermal expansion rate of the resin material.

4. The box frame structure of claim 2, wherein the honeycomb material is metal, and a honeycomb hole of the honeycomb material is arranged such that it is perpendicular to the first panel and the second panel;
the first panel and the second panel are reverse thermal expansion, a thermal expansion rate of the composite material structural plate (1) in the thickness direction is zero.

5. The box frame structure of claim 2, wherein the preset position is the position where the composite material structural plate (1) bears an external load;
the first panel and the second panel are provided with mounting holes in areas corresponding to the preset position, and a positioning device of the external structure passes through the first panel and the second panel through the mounting holes and is fixedly connected with the metal embedded part (102, 104);
the external structure comprises the metal frame (3) and an equipment guide rail.

6. The box frame structure of claim 1, wherein the cross-section of the metal frame (3) is L-shaped, and the mounting groove (33) comprises a first mounting groove and a second mounting groove;
the first mounting groove is arranged so as to be perpendicular to the second mounting groove.

7. The box frame structure of claim 1, wherein the metal frame (3) comprises:
a main frame (32), the main frame (32) is in the shape of a long cube, and a first side and a second side of the main frame (32) are provided with a first mounting groove and a second mounting groove respectively;
the side of the main frame (32) is also connected with an external device.

8. The box frame structure of claim 1, wherein the metal frame (3) is arranged on the external corner formed by the adjacent two composite material structural plates (1);
or the metal frame (3) is arranged on the internal corner formed by the adjacent two composite material structural plates (1);
or when the composite material structural plates (1) are lapped in a T-shape, the metal frames (3) are arranged in the angles on the two sides of the composite material structural plate (1) respectively.

9. A production method for box frame structure for manufacturing a box frame structure of claim 1, comprises:
coating the structural glue (4) at the fitting position of the composite material structural plate (1) and the metal frame (3) evenly, and inserting them into a preset installation position in the metal frame (3) to combine to obtain a preset box frame;
injecting the structural glue (4) into the glue injection holes (5) on the metal frame (3) respectively until the structural glue overflows the glue injection holes (5), so that the structural glue (4) forms a uniform glue layer in the glue storage groove (6).

## Patentansprüche

1. - Kastenrahmenstruktur, bestehend aus einer Verbundwerkstoffplatte und einem Metallrahmen,
wobei eine Oberflächenstruktur der Kastenrahmenstruktur aus Verbundwerkstoffstrukturplatten (1) gefertigt ist, eine prismatische Struktur der Kastenrahmenstruktur aus Metallrahmen (3) gefertigt ist und eine Verstärkungsrippenstruktur (2) in der Kastenrahmenstruktur angeordnet ist, wobei die Verstärkungsrippenstruktur (2) aus den Verbundwerkstoffstrukturplatten (1) gefertigt ist;
der Metallrahmen (3) zum Verbinden zweier angrenzender Verbundwerkstoffstrukturplatten (1) verwendet wird, und eine Seite des Metallrahmens (3) mit Montagenuten (33) hervorsteht, wobei die Montagenuten (33) jeweils die zwei Seiten der Verbundwerkstoffstrukturplatte (1) einspannen;
eine Kleberspeichernut (6) und ein Klebereinspritzloch (5) an einem Bindungsbereich des Metallrahmens (3) und der Verbundwerkstoffstrukturplatte (1) angeordnet sind, und ein Strukturkleber (4) wird durch das Klebereinspritzloch (5) in die Kleberspeichernut (6) eingespritzt wird, sodass eine gleichförmige Kleberschicht gebildet wird;
**dadurch gekennzeichnet, dass** die Verstärkungsrippenstruktur (2) Längsverstärkungsrippen (2-a) und diagonale Verstärkungsrippen (2-b) umfasst;
die Längsverstärkungsrippen (2-a) in der Kastenrahmenstruktur entlang einer Richtung einer Längsachse gemäß einem ersten voreingestellten Abstand verteilt und jeweils rechtwinklig an den entsprechenden Positionen mit den Oberflächenstrukturplatten verbunden und befestigt sind;
die diagonalen Verstärkungsrippen (2-b) zwischen einem Paar angrenzender Längsverstärkungsrippen (2-a) angeordnet sind, und die diagonalen Verstärkungsrippen (2-b) jeweils diagonal mit einem Rand der Längsverstärkungsrippen (2-a) fest verbunden und an den entsprechenden Positionen jeweils rechtwinklig mit den Oberflächenstrukturplatten verbunden und befestigt sind;
die Diagonalrichtungen des Paars angrenzender diagonaler Verstärkungsrippen (2-b) unterschiedlich sind.

2. - Kastenrahmenstruktur nach Anspruch 1, wobei die Verbundwerkstoffstrukturplatte (1) eine erste Platte, eine Zwischenschicht und eine zweite Platte umfasst, die erste Platte und die zweite Platte aus Fasermaterial gefertigt sind, die Zwischenschicht aus Wabenmaterial gefertigt ist;
ein eingebettetes Metallteil (102, 104) an einer voreingestellten Position der Zwischenschicht angeordnet ist;
die erste Platte, die zweite Platte und die Zwischenschicht durch den Strukturkleber zu einem Körper verbunden sind.

3. - Kastenrahmenstruktur nach Anspruch 2, wobei das Fasermaterial Kohlefaserharz-Verbundwerkstoff ist;
der Kohlefaserharz-Verbundwerkstoff eine Vielzahl von Lagen aus Kohlefasergewebe und ein zwischen der Vielzahl von Lagen aus Kohlefasergewebe gebundenes Harzmaterial umfasst;
eine umgekehrte Wärmeausdehnungsrate der Vielzahl von Lagen aus Kohlefasergewebe gleich ist wie die Wärmeausdehnungsrate des Harzmaterials.

4. - Kastenrahmenstruktur nach Anspruch 2, wobei das Wabenmaterial Metall ist und eine Wabenzelle des Wabenmaterials angeordnet ist, sodass sie senkrecht zu der ersten Platte und zu der zweiten Platte ist;
die erste Platte und die zweite Platte umgekehrt wärmeausdehnend sind, eine Wärmeausdehnungsrate der Verbundwerkstoffstrukturplatte (1) in Stärkerichtung null ist.

5. - Kastenrahmenstruktur nach Anspruch 2, wobei die voreingestellte Position die Position ist, an der die Verbundwerkstoffstrukturplatte (1) eine externe Last trägt;
die erste Platte und die zweite Platte in Bereichen, die der voreingestellten Position entsprechen, mit Montagelöchern versehen sind, und eine Positioniervorrichtung der externen Struktur die erste Platte und die zweite Platte durch die Montagelöcher durchdringt und fest mit dem eingebetteten Metallteil (102, 104) verbunden ist;
die externe Struktur den Metallrahmen (3) und eine Geräteführungsschiene umfasst.

6. - Kastenrahmenstruktur nach Anspruch 1, wobei der Querschnitt des Metallrahmens (3) L-förmig ist und die Montagenut (33) eine erste Montagenut und eine zweite Montagenut umfasst;
die erste Montagenut angeordnet, um senkrecht zu der zweiten Montagenut zu sein.

7. - Kastenrahmenstruktur nach Anspruch 1, wobei der Metallrahmen (3) Folgendes umfasst:
einen Hauptrahmen (32), wobei der Hauptrahmen (32) in der Form eines langen Quaders ist und eine erste Seite und eine zweite Seite des Hauptrahmens (32) jeweils mit einer ersten Montagenut und einer zweiten Montagenut versehen sind;
die Seite des Hauptrahmens (32) auch mit einer externen Vorrichtung verbunden ist.

8. - Kastenrahmenstruktur nach Anspruch 1, wobei der Metallrahmen (3) an der äußeren Ecke angeordnet ist, die durch die angrenzenden zwei Verbundwerkstoffstrukturplatten (1) gebildet ist;
oder der Metallrahmen (3) an der inneren Ecke angeordnet ist, die durch die angrenzenden zwei Verbundwerkstoffstrukturplatten (1) gebildet ist;
oder wenn die Verbundwerkstoffstrukturplatten (1) T-förmig überlappt sind, die Metallrahmen (3) jeweils in den Winkeln an den zwei Seiten der Verbundwerkstoffstrukturplatte (1) angeordnet sind.

9. - Produktionsverfahren für eine Kastenrahmenstruktur zum Herstellen einer Kastenrahmenstruktur nach Anspruch 1, umfassend:
gleichförmiges Auftragen des Strukturklebers (4) an der Passstelle der Verbundwerkstoffstrukturplatte (1) und des Metallrahmens (3) und deren Einsetzen in eine voreingestellte Einbaulage in dem Metallrahmen (3) zur Kombination, um eine voreingestellte Kastenrahmenstruktur zu erlangen;
jeweiliges Einspritzen des Strukturklebers (4) in die Klebereinspritzlöcher (5) an dem Metallrahmen (3), bis der Strukturkleber aus den Klebereinspritzlöchern (5) austritt, sodass der Strukturkleber (4) eine gleichförmige Kleberschicht in der Kleberspeichernut (6) bildet.

## Revendications

1. - Structure de châssis caisson composée d'une plaque en matériau composite et d'un châssis métallique, dans laquelle
une structure de surface de la structure de châssis caisson est constituée de plaques structurelles en matériau composite (1), une structure prismatique de la structure de châssis caisson est constituée de châssis métalliques (3), et une structure à tasseaux de renfort (2) est disposée dans la structure de châssis caisson, et la structure à tasseaux de renfort (2) est constituée des plaques structurelles en matériau composite (1) ;
le châssis métallique (3) sert à relier deux plaques structurelles en matériau composite (1) adjacentes, et un côté du châssis métallique (3) fait saillie avec des rainures de montage (33), et les rainures de montage (33) serrent respectivement les deux côtés de la plaque structurelle en matériau composite (1) ;
une rainure de stockage de colle (6) et un orifice d'injection de colle (5) sont prévus sur une zone de collage du châssis métallique (3) et de la plaque structurelle en matériau composite (1), et une colle structurelle (4) est injectée dans la rainure de stockage de colle (6) à travers l'orifice d'injection de colle (5) de façon à former une couche uniforme de colle ;
**caractérisée par le fait que** la structure à tasseaux de renfort (2) comprend des tasseaux de renfort longitudinaux (2-a) et des tasseaux de renfort diagonaux (2-b) ;
les tasseaux de renfort longitudinaux (2-a) sont répartis dans la structure de châssis caisson le long d'une direction d'un axe long selon un premier intervalle prédéfini, et sont reliés et fixés perpendiculairement à des plaques structurelles de surface aux positions correspondantes, respectivement ;
les tasseaux de renfort diagonaux (2-b) sont disposés entre une paire de tasseaux de renfort longitudinaux (2-a) qui sont adjacents, et les tasseaux de renfort diagonaux (2-b) sont reliés de manière fixe à un bord des tasseaux de renfort longitudinaux (2-a) en diagonale, respectivement, et sont reliés et fixés perpendiculairement aux plaques structurelles de surface aux positions correspondantes ;
les directions diagonales de la paire de tasseaux de renfort diagonaux (2-b) qui sont adjacentes sont différentes.

2. - Structure de châssis caisson selon la revendication 1, dans laquelle la plaque structurelle en matériau composite (1) comprend un premier panneau, une couche intermédiaire et un second panneau, le premier panneau et le second panneau sont faits de matériau fibreux, la couche intermédiaire est faite de matériau alvéolaire ;
une pièce métallique encastrée (102, 104) est disposée à une position prédéfinie de la couche intermédiaire ;
le premier panneau, le second panneau et la couche intermédiaire sont reliés en un seul corps par la colle structurelle.

3. - Structure de châssis caisson selon la revendication 2, dans laquelle le matériau fibreux est un matériau composite de résine-fibre de carbone ;
le matériau composite de résine-fibre de carbone comprend une pluralité de couches de tissus en fibre de carbone et un matériau de résine lié entre la pluralité de couches de tissus en fibre de carbone ;
un coefficient de dilatation thermique inverse de la pluralité de couches de tissus en fibre de carbone est identique à un coefficient de dilatation thermique du matériau de résine.

4. - Structure de châssis caisson selon la revendication 2, dans laquelle le matériau alvéolaire est en métal, et un orifice alvéolaire du matériau alvéolaire est disposé de telle sorte qu'il est perpendiculaire au premier panneau et au second panneau ;
le premier panneau et le second panneau présentent des dilatations thermiques inverses, un coefficient de dilatation thermique de la plaque structurelle en matériau composite (1) dans la direction d'épaisseur est nul.

5. - Structure de châssis caisson selon la revendication 2, dans laquelle la position prédéfinie est la position à laquelle la plaque structurelle en matériau composite (1) supporte une charge externe ;
le premier panneau et le second panneau comportent des orifices de montage dans des zones correspondant à la position prédéfinie, et un dispositif de positionnement de la structure externe traverse le premier panneau et le second panneau par les orifices de montage et est relié de manière fixe à la partie métallique encastrée (102, 104) ;
la structure externe comprend le châssis métallique (3) et un rail de guidage d'équipement.

6. - Structure de châssis caisson selon la revendication 1, dans laquelle la section transversale du châssis métallique (3) est en forme de L, et la rainure de montage (33) comprend une première rainure de montage et une seconde rainure de montage ;
la première rainure de montage est disposée de façon à être perpendiculaire à la seconde rainure de montage.

7. - Structure de châssis caisson selon la revendication 1, dans laquelle le châssis métallique (3) comprend :
un châssis principal (32), le châssis principal (32) a la forme d'un long cube, et un premier côté et un second côté du châssis principal (32) comportent une première rainure de montage et une seconde rainure de montage, respectivement ;
le côté du châssis principal (32) est également relié à un dispositif externe.

8. - Structure de châssis caisson selon la revendication 1, dans laquelle le châssis métallique (3) est disposé sur l'angle externe formé par les deux plaques structurelles en matériau composite (1) adjacentes ;
ou le châssis métallique (3) est disposé sur l'angle interne formé par les deux plaques structurelles en matériau composite (1) adjacentes ;
ou, lorsque les plaques structurelles en matériau composite (1) se chevauchent en une forme de T, les châssis métalliques (3) sont disposés dans les angles situés de part et d'autre de la plaque structurelle en matériau composite (1), respectivement.

9. - Procédé de fabrication pour structure de châssis caisson pour fabriquer une structure de châssis caisson selon la revendication 1, comprenant :
appliquer uniformément la colle structurelle (4) à la position d'assemblage de la plaque structurelle en matériau composite (1) et du châssis métallique (3), puis les insérer dans une position d'installation prédéfinie au sein du châssis métallique (3) afin de les assembler pour obtenir un châssis caisson prédéfini ;
injecter la colle structurelle (4) dans les orifices d'injection de colle (5) du châssis métallique (3), respectivement, jusqu'à ce que la colle structurelle déborde des orifices d'injection de colle (5), de telle sorte que la colle structurelle (4) forme une couche uniforme de colle dans la rainure de stockage de colle (6).
